# EUROPÄISCHE PATENTSCHRIFT

(11) **EP 3 534 022 B1**
(45) Veröffentlichungstag und Bekanntmachung des Hinweises auf die Patenterteilung: **09.06.2021**
(21) Anmeldenummer: 19154486.5
(22) Anmeldetag: 30.01.2019
(51) Int. Cl.: F16C 27/02, F01N 3/28, F16F 1/362, F16C 33/04, F01N 13/18

(54) **LAGER UND VERFAHREN ZU DESSEN HERSTELLUNG**
BEARING AND METHOD FOR ITS MANUFACTURE
PALIER ET SON PROCÉDÉ DE FABRICATION

(30) Priorität: 01.03.2018 DE 102018104740
(43) Veröffentlichungstag der Anmeldung: 04.09.2019
(73) Patentinhaber: Buck, Alfred, 71149 Bondorf (DE)
(72) Erfinder: Buck, Alfred, 71149 Bondorf (DE)
(74) Vertreter: Sebastian, Jens

(56) Entgegenhaltungen:
- EP-A1- 0 447 294
- DE-A1-102008 058 596
- US-A- 3 250 502
- US-A1- 2003 169 951

## Beschreibung

Die Erfindung betrifft ein Verfahren zur Herstellung eines Lagers, insbesondere eines hochtemperaturbeständigen, toleranzausgleichenden Wellenlagers, gemäß Anspruch 1.

Weiter betrifft die Erfindung ein Lager insbesondere ein hochtemperaturbeständiges, toleranzausgleichendes Wellenlager gemäß Anspruch 7.

Lager zur Lagerung von Wellen sind allgemein bekannt. Die Lager können als Wälzlager oder Gleitlager ausgeführt sein. In Abgassträngen von Kraftfahrzeugen werden beispielsweise Gleitlager für die Lagerung von Klappen im Abgasstrang verwendet. Hierbei werden die Gleitlager und auch die Klappenwelle oder -achse hohen Temperaturunterschieden ausgesetzt, oft über 700°C Temperaturdifferenz. Wellenmaterial und Lagermaterial sind oft unterschiedlich ausgebildet und weisen unterschiedliche Geometrien auf, sodass es bei derartigen Temperaturbelastungen zu unterschiedlichen Ausdehnungen von Welle und Lager kommt. Um eine geeignete Lagerung der Welle bei derartigen Temperaturunterschieden zu gewährleisten, wurden die Lager bislang so ausgelegt, dass diese in einem Zwischenbereich einen optimierten Lagersitz aufweisen, der bei einem untersten Bereich und einem obersten Bereich allerdings suboptimal, aber gerade noch tolerierbar ist. US 3 250 502 A offenbart ein Verfahren zur Herstellung eines Lagers, insbesondere eines hochtemperaturbeständigen, toleranzausgleichenden Wellenlagers.

Es ist deshalb eine Aufgabe der vorliegenden Erfindung, ein Lager und ein Herstellverfahren für ein Lager zu schaffen, bei dem ein optimierter Sitz gewährleistet ist, und bei dem insbesondere auch in einem obersten Temperaturbereich, dem Betriebsbereich, und ggf. auch in einem untersten Temperaturbereich, dem Ruhebereich, ein optimierter Lagersitz gewährleistet ist.

Diese und weitere Aufgaben werden gelöst durch ein Verfahren nach Anspruch 1, einem Lager nach Anspruch 7 und einer Verwendung nach Anspruch 10.

Vorteilhafte Weiterbildungen der Erfindung sind in den abhängigen Ansprüchen angegeben oder werden nachstehend im Zusammenhang mit der Beschreibung der Erfindungen angegeben.

Die Erfindung schließt die technische Lehre ein, dass bei einem Verfahren zur Herstellung eines Lagers, insbesondere eines hochtemperaturbeständigen, toleranzausgleichenden Wellenlagers, vorgesehen ist, dass dieses die Schritte umfasst: Bereitstellen einer Lagerbuchse, die zum Aufnehmen eines Wellenabschnitts ausgebildet ist, Bereitstellen eines Drahtgestrickrings, der zum Umgeben der Lagerbuchse ausgebildet ist, Umgeben, insbesondere Aufpressen, des Drahtgestrickrings um die Lagerbuchse, sodass die Lagerbuchse von dem Drahtgestrickring umgeben ist, wobei die Lagerbuchse an genau einer Stelle durchgehend geschlitzt wird, sodass der Schlitz einmal die Wandung der Lagerbuchse teilt, wobei ein Zusammenpressen der geschlitzten Lagerbuchse durch den umgebenden Drahtgestrickring bewirkt wird, wobei das Schlitzen der Lagerbuchse vor einem Aufpressen des Drahtgestrickrings auf die Lagerbuchse (110) erfolgt.

In einer anderen Ausführungsform ist vorgesehen, dass eine Struktur außen an der Lagerbuchse vorgesehen wird, insbesondere mindestens eine Anformung und/oder Ausnehmung, sodass der aufgepresste Drahtgestrickring zusätzlich durch die Struktur die Lagerbuchse hält.

In einer weiteren Ausführungsform ist vorgesehen, dass der Drahtgestrickring aus einem Drahtrundgestrick, insbesondere einem schlauchförmigen Drahtrundgestrick mittels Rundstricken hergestellt wird.

Noch eine weitere Ausführungsform sieht vor, dass der Drahtgestrickring vor und/oder beim Umgeben/Aufpressen um bzw. auf die Lagerbuchse hergestellt wird. Zudem ist in einer Ausführungsform vorgesehen, dass das Bereitstellen bzw. das Umgeben oder Aufpressen umfasst: Komprimieren, insbesondere Zusammenpressen des Drahtrundgestricks, sodass daraus ein vorgepresster Drahtgestrickring oder ein Drahtgestrickringrohling resultiert.

In einer weiteren Ausführungsform ist vorgesehen, dass das Umgeben bzw. Aufpressen umfasst: Umgeben bzw. Aufpressen des Drahtgestrickrings und/oder des Drahtgestrickringrohlings um die Lagerbuchse und weiteres Komprimieren des Drahtgestrickrings und/oder des Drahtgestrickringrohlings, sodass eine Presspassung zwischen Lagerbuchse und Drahtgestrickring resultiert.

Auch schließt die Erfindung die technische Lehre ein, dass bei einem Lager, insbesondere einem hochtemperaturbestädigen, toleranzausgleichenden Wellenlager, vorgesehen ist, dass das Lager nach einem hier beschriebenen Verfahren hergestellt ist, wobei das Lager umfasst: eine Lagerbuchse, die zum Aufnehmen eines Wellenabschnitts ausgebildet ist, ein Drahtgestrickring, der zum Umgeben der Lagerbuchse ausgebildet ist, wobei der Drahtgestrickring die Lagerbuchse umgibt, insbesondere wobei der Drahtgestrickring um die Lagerbuchse aufgepresst ist, sodass die Lagerbuchse von dem Drahtgestrickring umgeben ist, wobei die Lagerbuchse genau einen durchgehenden Schlitz aufweist, sodass der Schlitz einmal die Wandung der Lagerbuchse teilt, sodass eine geschlitzte Lagerbuchse daraus resultiert, wobei ein Zusammenpressen der geschlitzten Lagerbuchse durch den umgebenden Drahtgestrickring bewirkt ist.

In einer Ausführungsform ist vorgesehen, dass die Lagerbuchse einen ringförmigen, außen umlaufenden Absatz aufweist, an welchen der Drahtgestrickring angrenzt. In anderen Ausführungsformen weist die Lagerbuchse eine beliebige Anformung und/oder Ausnehmung auf. In einer bevorzugten Ausführungsform ist der umlaufende Absatz als Flansch ausgebildet. Dieser sitzt vorzugsweise an einem Ende der Lagerbuchse. An den Flansch schließt sich der hohlzylindrische Abschnitt der Lagerbuchse an. In anderen Ausführungsformen sind mehrere Anformungen oder Ausnehmungen vorgesehen.

Noch eine andere Ausführungsform sieht vor, dass ein Gehäuse vorgesehen ist, in welchen die Lagerbuchse mit dem umgebenden Drahtgestrickring aufgenommen ist.

Vorgesehen ist die Verwendung eines komprimierten Drahtrundgestricks als dämpfungs- und/oder toleranzausgleichender hochtemperaturbeständiger Lagersitz-Drahtgestrickring für ein Lager, insbesondere für ein Hochtemperaturwellenlager in einem Abgasstrang eines Verbrennungsmotor-Abgasstrangs.

Die Lagerbuchse kann eine beliebige Lagerbuchse sein. Bevorzugt ist die Lagerbuchse als Gleitlager ausgebildet oder Bestandteil eines Gleitlagers. Dabei ist die Lagerbuchse aus einem geeigneten Lagermaterial ausgebildet. Das Lagermaterial bzw. die Lagerbuchse ist so ausgebildet, dass diese einen gehärteten Wellenabsatz aufnehmen kann. Das Lagermaterial für die Lagerbuchse ist vorzugsweise ausgewählt aus der Gruppe der Lagerwerkstoffe umfassend Bronze, Weißmetall, Aluminiumlegierungen, Kunststoffe, PTFE, Keramik, faserverstärkte Keramik, Messinglegierungen, Graphit, massives Graphit, Sinterwerkstoffe, Stein. Insbesondere ist die Lagerbuchse als selbstschmierende Lagerbuchse ausgebildet. Die Lagerbuchse weist vorzugsweise einen ringförmigen Querschnitt auf. Dabei ist ein Innendurchmesser der Lagerbuchse vorzugsweise konstant. Die Wandung der Lagerbuchse ist vorzugsweise mit einer konstanten Dicke ausgebildet, sodass sich eine kreisringzylindrische Lagerbuchse ergibt. In anderen Ausführungsformen variiert die Dicke der Wandung, insbesondere in eine axiale Richtung der Buchse, sodass sich beispielsweise konische oder andere gekrümmte oder nicht zylindrische Außenkonturen der Lagerbuchse ergeben. Vorzugsweise ist die Lagerbuchse als kreiszylindrische Lagerbuchse ausgeführt. Die Lagerbuchse weist einen Innendurchmesser auf, der zur Aufnahme einer korrespondierenden Welle ausgebildet ist. Das Außenmaß der Buchse kann konstant sein, beispielsweise mit einem konstanten Durchmesser ausgebildet sein, oder variiert über seine axiale Erstreckung. Vorzugsweise ist die Außenkontur des Lagers rotationssymmetrisch um die Achse der Lagerbuchse, sodass diese von einem Ring oder Ringkörper umschließbar ist. Die Lagerbuchse kann beispielsweise als Drehteil, beispielsweise aus einem Graphitmaterial hergestellt sein.

Um die Lagerbuchse beispielsweise in einem entsprechenden Lagersitz eines Lagergehäuses aufzunehmen, ist ein Drahtgestrickring vorgesehen. Dieser ist zwischen Lagerbuchse und Lagergehäuse angeordnet. Der Drahtgestrickring erlaubt einen temperaturbeständigen, gedämpften und wärmeausdehnungstoleranten Lagersitz. Der Drahtgestrickring ist als Rundgestrick, vorzugsweise als ein aus einer Maschenware hergestelltes Rundgestrick ausgebildet. Das Rundgestrick ist aus mindestens einem Drahtfaden, vorzugsweise aus genau einem Faden hergestellt. In anderen Ausführungsformen können mehrere Fäden verwendet werden. Der jeweilige Faden weist bevorzugt einen kreisförmigen Querschnitt auf.

Das Rundgestrick ist vorzugsweise als Rundgestrickschlauch ausgeführt. Zur Herstellung eines Rundgestrickrings, wird der Rundgestrickschlauch auf eine vorbestimmte Länge geschnitten. Aus dem auf Länge geschnittenen Rundgestrickschlauch wird nun der Rundgestrickring hergestellt. Dies kann in einer Ausführungsform mittels Umstülpen, insbesondere wiederholtem, teilweise Umstülpen zu einem Ringkörper, also einem Aufrollen erfolgen. Der mittels Umstülpen zu einem Torus aufgerollte Ringkörper wird dann zu einem Drahtgestrickring verpresst. In einer anderen Ausführungsform wird der auf Länge geschnittene Rundgestrickschlauch direkt, das heißt ohne vorheriges Umstülpen verpresst. Das Verpressen erfolgt bevorzugt in einer Form. Hierbei wird der Rundgestrickschlauch in eine Form gebracht, welche den Rundgestrickschlauch innen und außen umgibt. Nach Einbringen des Rundgestrickschlauchs wird dieser in der Form mittels eines Stempels komprimiert. Durch die Form wird die Kontur des verpressten Rundgestrickschlauchs festgelegt. Der Pressvorgang kann einmal oder mehrmals durchgeführt werden.

Alternativ oder ergänzend kann das Pressen auf der Lagerbuchse erfolgen. Die Lagerbuchse dient somit als das den Rundgestrickschlauch innen begrenzende Formelement.

Nach dem Bereitstellen der Lagerbuchse und des Drahtgestrickrings werden Lagerbuchse und Drahtgestrickring zusammengefügt. Dies erfolgt bevorzugt durch Aufpressen des Drahtgestrickrings um die Lagerbuchse. Hierzu wird die Lagerbuchse in eine Form gegeben und der Drahtgestrickring in eine andere Form. Die beiden Formen werden so zueinander positioniert, dass der Drahtgestrickring von der einen Form auf die Lagerbuchse in der anderen Form bringbar ist. Vorzugsweise sind die Achsen der Lagerbuchse und des Drahtgestrickrings hierbei etwa konzentrisch angeordnet, wobei durch den zumindest etwas nachgiebigen Drahtgestrickring leichte Abweichungen möglich sind. Sind die Achsen von Drahtgestrickring und Lagerbuchse etwa konzentrisch angeordnet, wird der Drahtgestrickring auf die Lagerbuchse gepresst. Das Pressen kann so ausgebildet sein, dass sowohl der Drahtgestrickring um die Lagerbuchse auf diese gefügt wird, als auch eine weitere Komprimierung des Drahtgestrickrings erfolgt.

Die Lagerbuchse weist an mindestens einer Stelle einen Schlitz auf. Vorzugsweise weist die Lagerbuchse einen durchgängigen Schlitz auf, der einmal die Wandung der Lagerbuchse teilt. Für eine optimale Funktionsweise weist die Lagerbuchse genau einen durchtrennenden Schlitz auf. Die Lagerbuchse ist somit grob vereinfacht C-Förmig ausgebildet. Durch die C-förmige Ausbildung der Lagerbuchse, durch den entsprechenden Schlitz, lässt sich die Lagerbuchse, unabhängig von dem Material, in radiale Richtung dehnen bzw. zusammendrücken. Dieser Schlitz ermöglicht eine vereinfachte Montage von Drahtgestrickring und Lagerbuchse. Zum anderen lassen sich über die geschlitzte Lagerbuchse Ausdehnungen der aufgenommenen Welle ausgleichen. Die Lagerbuchse ist aus einem Lagermaterial oder Lagerwerkstoff hergestellt, der für sich allenfalls geringe Nachgiebigkeit, jedenfalls eine geringere Nachgiebigkeit aufweist, als für eine Wärmeausdehnung der aufgenommen Welle erforderlich ist. Der Umgebende Drahtgestrickring ist nicht geschlitzt. Durch die Kombination von nachgiebigem, ungeschlitzten Drahtgestrickring und geschlitzter, nicht nachgiebiger Lagerbuchse, ergibt sich ein Lager, welches bei Temperaturänderungen Wärmeausdehnungen der Welle toleriert, einen gedämpften Lagersitz realisiert, hochtemperaturbeständig ist und einen sicheren Sitz gewährleistet.

Der Schlitz der Lagerbuchse kann beliebig geformt sein. Vorzugsweise erfolgt der Schlitz durch einen geraden Schnitt. Allerdings sind andere Schlitzformen wie schlangenförmiger Schlitz oder dergleichen denkbar. Die zueinander weisenden, benachbarten Schlitzflächen sind komplementär ausgebildet, sodass diese beim Zusammenpressen ineinandergreifen und so einen möglichst geschlossenen Ring bilden. Das Zusammenpressen der geschlitzten Lagerbuchse wird durch den umgebenden Drahtgestrickring bewirkt.

Für einen weiteren Toleranzausgleich, zum Beispiel bei Wärmeausdehnungen, kann die Lagerbuchse neben dem durchgängigen Schlitz weitere Schlitze aufweisen, die dann aber nicht durchgängig ausgebildet sind, sondern vielmehr als Einkerbungen ausgebildet sind. Bei einem durchgängigen Schlitz entsteht eine Trennung, sowohl in axialer Richtung als auch in einer radialen Richtung. Es entstehen zwei zueinander weisenden Schnitt- oder Schlitzflächen, und zwar über die gesamte axiale Erstreckung der Lagerbuchse. Bei einem nichtdurchgängigen Schlitz erstreckt sich der Schlitz in axiale Richtung nur über einen Teil der Lagerbuchse. Der Schlitz erstreckt sich dabei vorzugsweise lediglich bis zu einem äußeren Rand an einer der Stirnseiten der Lagerbuchse. Bei mehreren nichtdurchgängigen Schlitzen können diese sich zu unterschiedlichen Stirnseiten erstrecken und/oder unterschiedlich ausgeführt sein, beispielsweise mit unterschiedlichen Schnitten / Schnittflächen. Der Schnitt selber kann auf unterschiedlichste Weisen in die Lagerbuchse eingebracht werden. Lagerbuchse und Drahtgestrickring werden so aufeinander gepresst, dass eine Presspassung von Lagerbuchse und Drahtgestrickring resultiert. Das Schlitzen der Lagerbuchse erfolgt vor einem Aufpressen des Drahtgestrickrings auf die Lagerbuchse.

Um ein Pressen des Drahtgestrickrings auf die Lagerbuchse zu vereinfachen, weist die Lagerbuchse bevorzugt eine äußere Struktur, das heißt im Kontaktbereich mit dem Drahtgestrickring auf. Die Struktur kann als einzelne Anformung / Ausnehmung und oder als mehrere Anformungen / Ausnehmungen ausgebildet sein. In einer Ausführungsform ist die Struktur als nach außen / radial abragender Flansch ausgebildet. Der Drahtgestrickring wird beim Pressen auf die Lagerbüchse dann gegen den Flansch gepresst. Der Flansch ist vorzugsweise ununterbrochen umlaufend an einem unteren oder axial äußeren Rand bzw. an einer Stirnseite der Lagerbuchse ausgebildet. In anderen Ausführungsformen ist der Flansch unterbrochen ausgebildet. Der Flansch ragt bevorzugt etwa rechtwinklig von der Lagerbuchse bzw. radial von dieser nach außen. In anderen Ausführungsformen ist eine Ausnehmung in der Lagerbuchse vorgesehen. Diese kann die Wandung der Lagerbuchse durchdringen und somit als Durchgangsöffnung ausgeführt sein. Bevorzugt durchdringt die Ausnehmung die Wandung nicht vollständig, sodass die Innenfläche der Lagerbuchse, welche in Kontakt mit der aufzunehmenden Welle steht, unbeeinflusst von der Ausnehmung ist. Die Kontur und Lage de Ausnehmung ist beliebig. In einer anderen Ausführungsform ist eine Anformung vorgesehen. Dies kann ebenfalls an einer beliebigen Stelle und mit beliebiger Kontur ausgeführt sein. Bevorzugt ist eine Ausnehmung. Beim Aufpressen des Drahtgestrickrings kann sich dieser in die Ausnehmung ausdehnen und somit einen zusätzlichen Halt neben dem Halt durch die Presspassung erfahren. Mehrere unterschiedliche Anformungen und/oder Ausnehmungen können kombiniert werden. Bevorzugt ist ein stirnseitiger, radial abragender Rand oder Flansch vorgesehen.

Das so hergestellte Lager lässt sich insbesondere in einem Abgasstrang eines Verbrennungsmotors oder dergleichen verwenden. Vorzugsweise lässt sich mit dem Lager eine Welle oder eine Achse lagern. Hierzu ist ein Lager vorgesehen, welches zwei Lagerbuchsen vorsieht, von denen mindestens eine als hier beschriebene Lagerung ausgeführt ist. Bevorzugt sind beide Lager als hier beschriebene Lager ausgeführt. Die Lager werden in ein Gehäuse eingesetzt. Dabei grenzt das Lager mit dem äußeren Drahtgestrickring an das Gehäuse bzw. die entsprechende Lageraufnehmung an. Vorzugsweise ist das Lager in das Gehäuse eingepresst, sodass sich auch hier ein Presssitz ergibt. Das Lagergehäuse kann beispielsweise in axiale Richtung zylindrisch oder auch konisch oder anders geformt sein. Durch unterschiedlich tiefes Einpressen des Lagers in die Lageraufnahme lässt sich so der Presssitz variieren. Bei einer Anordnung des Lagers in einem Gehäuse ist das Lager vorzugsweise so angeordnet, dass der durchgehende Schlitz sich auf einer etwa 12-Uhr Position, das heißt an einer obersten vertikalen Stelle befindet. Auch lässt sich der durchgehende Schlitz in einer anderen Ausführungsform in 6-Uhr Position anordnen. Vorzugsweise ist der durchgängige Schlitz nicht in einer 3- oder 9-Uhr Position angeordnet.

Neben der Wahl des Fasermaterials werden die Eigenschaften der Maschenware auch durch die Größe und Dichte der Maschen beeinflusst, wobei die Dichte der Maschen in einem formgebenden Verfahrensschritt erhöht werden kann. Dies hat Auswirkungen auf die Eigenschaften der Maschenware, insbesondere auf die Elastizität und damit auch Federung und die Stoßabsorbtion. Die Maschenware weist dabei eine Maschenweite von 0,01 mm bis 50 mm, bevorzugt von 0,5 mm bis 20 mm und besonders bevorzugt von 3 mm bis 8 mm auf. Insbesondere hat sich herausgestellt, dass eine gestrickte und insbesondere eine rund gestrickte Maschenware bevorzugt ist. Auf diese Weise lässt sich ein als Schlauch ausgebildetes Gestrick realisieren. In einer Ausführungsform wird das Rundstricken in einem ersten Temperaturbereich durchgeführt, der sich von einem Einsatztemperaturbereich oder zweitem Temperaturbereich, in dem das Rundgestrick eingesetzt wird, unterscheidet. Bevorzugt unterscheidet sich der erste Temperaturbereich von dem zweiten Temperaturbereich um mindestens 2°C, bevorzugt um mindestens 10°C, weiter bevorzugt um mindestens 20°C und am meisten bevorzugt um mindestens 25°C. Bevorzugt liegt der zweite Temperaturbereich im Bereich der Körpertemperatur, also im Bereich um die 37°C plus minus einem Toleranzbereich von etwa 5°C. Das Rundgestrick kann als einlagiges Rundgestrick, das heißt mit einem einfachen Mantel ausgebildet sein. In einer anderen Ausführungsform ist das Rundgestrick mehrlagig, beispielsweise doppellagig, das heißt mit einer doppelten Mantelfläche ausgebildet.

Insbesondere hat es sich als vorteilhaft herausgestellt, dass bei der Herstellung das Maschenmaterial rund gestrickt wird und die Maschenware als gestrickter Schlauch vorliegt. In den Schlauch können Ausnehmungen eingebracht werden. Die Dichte der Maschen kann erhöht werden, und zwar wenn die Maschenware als gepresste Maschenware vorliegt. Dies geschieht in einem vorformgebenden Verfahrensschritt. Dies hat dabei Auswirkungen auf die Eigenschaft und verbessert insbesondere die Elastizität und damit die Feder- und Dämpfungseigenschaften. Durch die Maschenware bilden sich in einer Ausführungsform Hohlräume aus, welche beispielsweise als Federwege nutzbar sind oder in die andere Stoffe einbringbar sind. Die Größe der Hohlräume bestimmt zum Beispiel die Eigenschaften hinsichtlich Steifigkeit, Elastizität beziehungsweise Biegeelastizität, Kompressibilität, Federung und Dämpfung. Dabei werden die Elastizität und die Dämpfung und alle anderen Parameter (zum Beispiel Abmessung) entsprechend dem Einsatz oder Anwendungszweck gewählt.

In einer Ausführungsform der vorliegenden Erfindung ist vorgesehen, dass durch das Vorbestimmen der Maschengröße und/oder des Faserdurchmessers eine Federkennlinie bestimmt wird. Die Federkennlinie wird entsprechend einem Einsatzzweck gewählt und kann linear oder nichtlinear ausgeprägt sein.

Das Rundgestrick bzw. der Schlauch erstreckt sich dabei bevorzugt in eine Längsrichtung. In Querrichtungen sind entsprechend Maschenreihen ausgebildet, die miteinander verknüpft sind. Beispielsweise sind in einer Ausführung mehrere Schläuche oder Rundgestricke miteinander verbunden.

Auf die vorstehend beschriebene Weise lässt sich eine Ringscheibe herstellen, welche besonders für hohe Temperaturbereiche, für aggressive Umgebungen und hohe Belastungen geeignet ist.

Weitere die Erfindung verbessernde Maßnahmen sind in den Unteransprüchen angegeben oder ergeben sich aus der nachfolgenden Beschreibung von mindestens einem Ausführungsbeispiel der Erfindung, welches in den Figuren schematisch dargestellt ist. Sämtliche aus den Ansprüchen, der Beschreibung oder der Zeichnungen hervorgehenden Merkmale und/oder Vorteile, einschließlich konstruktive Einzelheiten, räumliche Anordnung und Verfahrensschritte können sowohl für sich als auch in verschiedensten Kombinationen erfindungswesentlich sein.

In den Figuren ist Folgendes dargestellt:
- Fig. 1: schematisch in einer perspektivischen Ansicht eine Ausführung eines Lagers und
- Fig. 2: schematisch in einer anderen perspektivischen Ansicht die Ausführung nach Fig. 1.

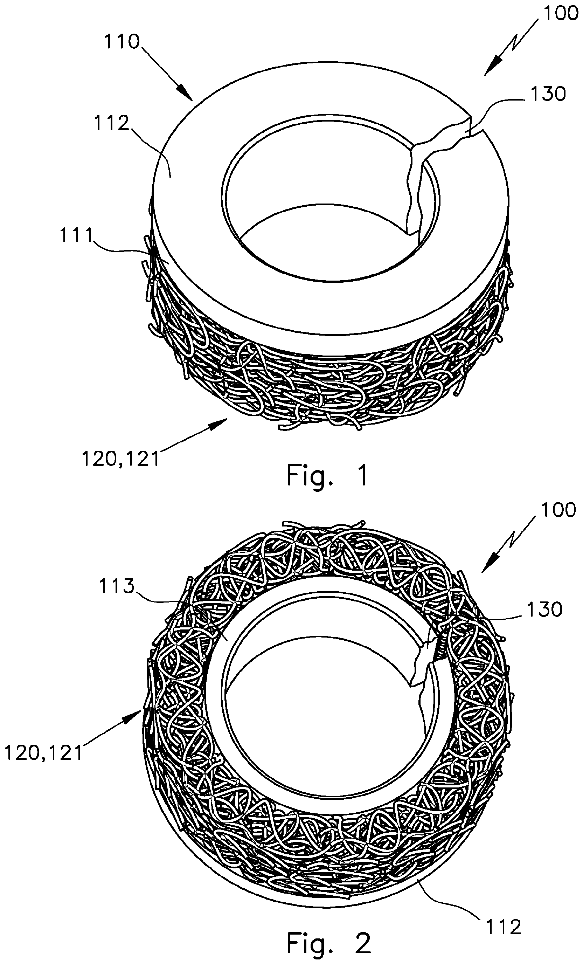

Die Fig. 1 und 2 zeigen in unterschiedlichen Ansichten ein Lager 100, genauer ein hochtemperaturbeständiges, toleranzausgleichendes Lager bzw. Wellenlager 100. Das Wellenlager 100 umfasst eine Lagerbuchse 110. Die Lagerbuchse 110 ist zur Aufnahme eines Wellenabschnitts ausgebildet. Der Wellenabschnitt kontaktiert dabei eine innere Oberfläche 111 der Lagerbuchse 110. Weiter umfasst das Lager 100 ein Drahtgestrick 120. Dabei umgibt das Drahtgestrick 120 die Lagerbuchse 110 umfänglich. Die Lagerbuchse 110 weist einen Flansch 112 auf, der sich an einen hohlzylindrischen Abschnitt 113 anschließt. An einem oberen Ende der Lagerbuchse 110, welches entfernt von dem Flansch 112 angeordnet ist, schließt das umgebende Drahtgestrick 120 bündig mit dem Ende der Lagerbuchse 110 ab. Die Lagerbuchse 110 weist einen Schlitz 130 auf. Dieser erstreckt sich von dem oberen Ende der Lagerbuchse 110 bis zu dem unteren Ende der Lagerbuchse 110, welches durch den Flansch 112 gebildet wird. Der Schlitz 130 erstreckt sich somit einmal durch die gesamte Lagerbuchse 110, sodass eine "geteilte" Lagerbuchse 110 realisiert ist. Das Drahtgestrick 120 ist als Drahtring 121 ausgebildet. Dieser umgibt ungeschlitzt die geschlitzte Lagerbuchse 110 umfänglich. Dabei umgibt der Drahtring 121 nur den hohlzylindrischen Abschnitt 113 der Lagerbuchse 110 umfänglich. Mit dem nicht bündig mit der Lagerbuchse 110 abschließenden Ende liegt der Drahtring 121, genauer der Drahtgestrickring 121 auf dem Flansch auf. In radiale Richtung ist der Drahtgestrickring 121 so ausgebildet, dass dieser bündig mit dem Flansch 112 abschließt.

### Bezugszeichenliste

- 100: Lager
- 110: Lagerbuchse
- 111: innere Oberfläche
- 112: Flansch
- 113: hohlzylindrischer Abschnitt
- 120: Drahtgestrick 120
- 121: Draht(-gestrick-)ring
- 130: Schlitz

## Patentansprüche

1. Verfahren zur Herstellung eines Lagers (100), insbesondere eines hochtemperaturbeständigen, toleranzausgleichenden Wellenlagers (100), umfassend die Schritte:
Bereitstellen einer Lagerbuchse (110), die zum Aufnehmen eines Wellenabschnitts ausgebildet ist,
Bereitstellen eines Drahtgestrickrings (121), der zum Umgeben der Lagerbuchse (110) ausgebildet ist,
Umgeben, insbesondere Aufpressen, des Drahtgestrickrings (121) um die Lagerbuchse (110), sodass die Lagerbuchse (110) von dem Drahtgestrickring (121) umgeben ist, **dadurch gekennzeichnet, dass**
die Lagerbuchse (110) an genau einer Stelle durchgehend geschlitzt wird, sodass der Schlitz (130) einmal die Wandung der Lagerbuchse (110) teilt, wobei ein Zusammenpressen der geschlitzten Lagerbuchse (110) durch den umgebenden Drahtgestrickring (121) bewirkt wird,
wobei das Schlitzen der Lagerbuchse (110) vor einem Aufpressen des Drahtgestrickrings (121) auf die Lagerbuchse (110) erfolgt.

2. Verfahren nach Anspruch 1, **dadurch gekennzeichnet, dass**
eine Struktur außen an der Lagerbuchse (110) vorgesehen wird, insbesondere mindestens eine Anformung und/oder Ausnehmung, sodass der aufgepresste Drahtgestrickring (121) zusätzlich durch die Struktur die Lagerbuchse (110) hält.

3. Verfahren nach einem der vorherigen Ansprüche 1 bis 2, **dadurch**
**gekennzeichnet, dass**
der Drahtgestrickring (121) aus einem Drahtrundgestrick, insbesondere einem schlauchförmigen Drahtrundgestrick mittels Rundstricken hergestellt wird.

4. Verfahren nach einem der vorherigen Ansprüche 1 bis 3, **dadurch**
**gekennzeichnet, dass**
der Drahtgestrickring (121) vor und/oder beim Umgeben/Aufpressen um bzw. auf die Lagerbuchse (110) hergestellt wird.

5. Verfahren nach einem der vorherigen Ansprüche 1 bis 4, **dadurch**
**gekennzeichnet, dass**
das Bereitstellen bzw. das Umgeben oder Aufpressen umfasst:
Komprimieren, insbesondere Zusammenpressen des Drahtrundgestricks, sodass daraus ein vorgepresster Drahtgestrickring (121) oder ein Drahtgestrickringrohling resultiert.

6. Verfahren nach einem der vorherigen Ansprüche 1 bis 5, **dadurch**
**gekennzeichnet, dass**
das Umgeben bzw. Aufpressen umfasst:
Umgeben bzw. Aufpressen des Drahtgestrickrings (121) und/oder des Drahtgestrickringrohlings um die Lagerbuchse (110) und weiteres Komprimieren des Drahtgestrickrings (121) und/oder des Drahtgestrickringrohlings, sodass eine Presspassung zwischen Lagerbuchse (110) und Drahtgestrickring (121) resultiert.

7. Lager (100), insbesondere ein hochtemperaturbeständiges, toleranzausgleichendes Wellenlager (100), wobei das Lager (100) nach einem der vorherigen Ansprüche 1 bis 6 hergestellt ist, umfassend:
eine Lagerbuchse (110), die zum Aufnehmen eines Wellenabschnitts ausgebildet ist,
ein Drahtgestrickring (121), der zum Umgeben der Lagerbuchse (110) ausgebildet ist,
wobei der Drahtgestrickring (121) die Lagerbuchse (110) umgibt, insbesondere wobei der Drahtgestrickring (121) um die Lagerbuchse (110) aufgepresst ist, sodass die Lagerbuchse (110) von dem Drahtgestrickring (121) umgeben ist, wobei die Lagerbuchse (110) genau einen durchgehenden Schlitz (130) aufweist, sodass der Schlitz (130) einmal die Wandung der Lagerbuchse (110) teilt, wobei ein Zusammenpressen der geschlitzten Lagerbuchse (110) durch den umgebenden Drahtgestrickring (121) bewirkt ist.

8. Lager (100) nach Anspruch 7, **dadurch gekennzeichnet, dass** die Lagerbuchse (110) einen ringförmigen, außen umlaufenden Absatz und/oder Flansch (120) aufweist, an welchen der Drahtgestrickring (121) angrenzt.

9. Lager (100) nach Anspruch 7 oder 8, **dadurch gekennzeichnet, dass** ein Gehäuse vorgesehen ist, in welchen die Lagerbuchse (110) mit dem umgebenden Drahtgestrickring (121) aufgenommen ist.

10. Verwendung eines komprimierten Drahtrundgestricks als dämpfungs- und/oder toleranzausgleichender, hochtemperaturbeständiger Lagersitz-Drahtgestrickring (121) für ein Lager (100), insbesondere für ein Hochtemperaturwellenlager (100) in einem Abgasstrang eines Verbrennungsmotor-Abgasstrangs, wobei das Lager (100) nach einem der vorherigen Ansprüche 7 bis 9 hergestellt ist.

## Claims

1. A method for manufacturing a bearing (100), in particular a high temperature resistant, tolerance compensating shaft bearing (100), comprising the steps of:
providing a bearing bushing (110), which is designed to receive a shaft segment,
providing a wire-mesh ring (121), which is designed to enclose the bearing bushing (110),
enclosing, in particular pressing-on, the wire-mesh ring (121) about the bearing bushing (110), so that the bearing bushing (110) is enclosed by the wire-mesh ring (121), **characterized in that**
the bearing bushing (110) is continuously slotted at precisely one place, so that the slot (130) divides the wall of the bearing bushing (110) once, wherein a compression of the slotted bearing bushing (110) is effected by the enclosing wire-mesh ring (121), wherein the slitting of the bearing bushing (110) occurs prior to a press-on of the wire-mesh ring (121) on the bearing bushing (110).

2. The method according to claim 1, **characterized in that**
a structure is provided outside on the bearing bushing (110), in particular at least a molding and/or recess, so that the pressed-on wire-mesh ring (121) additionally holds the bearing bushing (110) through the structure.

3. The method according to any of the preceding claims 1 to 2, **characterized in that**
the wire-mesh ring (121) is manufactured from a circular knitted wire fabric, in particular a tubular circular knitted wire fabric manufactured by means of circular knitting.

4. The method according to any of the preceding claims 1 to 3, **characterized in that**
the wire-mesh ring (121) is manufactured prior to and/or during enclosing/pressing-on about or on the bearing bushing (110) .

5. The method according to any of the preceding claims 1 to 4, **characterized in that**
the provision or the enclosure or press-on comprises:
compressing, in particular pressing together the circular knitted wire fabric, so that a pre-pressed wire-mesh ring (121) or a wire-mesh ring blank results.

6. The method according to any of the preceding claims 1 to 5, **characterized in that**
the enclosure or press-on comprises:
enclosing or pressing-on the wire mesh ring (121) and/or the wire-mesh ring blank about the bearing bushing (110) and
further compressing the wire-mesh ring (121) and/or the wire-mesh ring blank, so that a press fit results between the bearing bushing (110) and wire-mesh ring (121).

7. A bearing (100), in particular a high temperature resistant, tolerance compensating shaft bearing (100), wherein the bearing (100) is manufactured according to any of the preceding claims 1 to 6, comprising:
a bearing bushing (110), which is designed to receive a shaft segment,
a wire-mesh ring (121), which is designed to enclose the bearing bushing (110),
wherein the wire-mesh ring (121) encloses the bearing bushing (110), in particular
wherein the wire-mesh ring (121) is pressed-on about the bearing bushing (110), so that the bearing bushing (110) is enclosed by the wire mesh-ring (121), wherein
the bearing bushing (110) has precisely one continuous slot (130), so that the slot (130) divides the wall of the bearing bushing (110) once, wherein a compression of the slotted bearing bushing (110) is effected by the enclosing wire-mesh ring (121).

8. The bearing (100) according to claim 7, **characterized in that**
the bearing bushing (110) has an annular, externally revolving shoulder and/or flange (120), on which the wire-mesh ring (121) abuts.

9. The bearing (100) according to claim 7 or 8, **characterized in that**
a housing is provided, in which the bearing bushing (110) with the enclosing wire-mesh ring (121) is accommodated.

10. The use of a compressed circular knitted wire fabric as a damping and/or tolerance compensating, high temperature resistant bearing seat wire-mesh ring (121) for a bearing (100), in particular for a high temperature shaft bearing (100) in an exhaust gas system of an internal combustion engine exhaust gas system, wherein the bearing (100) is manufactured according to any of the preceding claims 7 to 9.

## Revendications

1. Procédé de fabrication d'un palier (100), en particulier d'un palier d'arbre (100) qui résiste aux températures élevées et compense les tolérances, qui comprend les étapes de :
fourniture d'un coussinet de palier (110) qui est conçu pour recevoir une partie d'arbre,
fourniture d'une bague en laine d'acier (121) qui est conçue pour entourer le coussinet de palier (110),
fait d'entourer, en particulier serrer, la bague en laine d'acier (121) autour du coussinet de palier (110), de sorte que le coussinet de palier (110) soit entouré par la bague en laine d'acier (121), **caractérisé en ce que**
le coussinet de palier (110) est fendu en continu en exactement un endroit, de sorte que la fente (130) divise une fois la paroi du coussinet de palier (110), dans lequel le fait de compresser ensemble le coussinet de palier (110) fendu est provoqué par la bague en laine d'acier (121) qui l'entoure, dans lequel le fait de fendre le coussinet de palier (110) se produit avant un serrage de la bague en laine d'acier (121) sur le coussinet de palier (110).

2. Procédé selon la revendication 1, **caractérisé en ce que**
une structure est prévue à l'extérieur contre le coussinet de palier (110), en particulier au moins un bossage et/ou un évidement, de sorte que la bague en laine d'acier (121) serrée tienne de plus le coussinet de palier (110) par la structure.

3. Procédé selon l'une des revendications précédentes 1 à 2, **caractérisé en ce que**
la bague en laine d'acier (121) est fabriquée dans une laine circulaire d'acier, en particulier une laine circulaire d'acier tubulaire, au moyen d'un tricotage circulaire.

4. Procédé selon l'une des revendications précédentes 1 à 3, **caractérisé en ce que**
la bague en laine d'acier (121) est fabriquée avant le et/ou lors du fait d'entourer/serrer autour ou sur le coussinet de palier (110).

5. Procédé selon l'une des revendications précédentes 1 à 4, **caractérisé en ce que**
la fourniture ou le fait d'entourer ou le serrage comprend :
la compression, en particulier le fait de compresser ensemble la laine circulaire d'acier, de sorte qu'en résulte une bague en laine d'acier (121) pré-compressée ou une ébauche de bague en laine d'acier.

6. Procédé selon l'une des revendications précédentes 1 à 5, **caractérisé en ce que**
le fait d'entourer ou le serrage comprend :
le fait d'entourer ou le serrage de la bague en laine d'acier (121) et/ou de l'ébauche de bague en laine d'acier autour du coussinet de palier (110) et
la compression ultérieure de la bague en laine d'acier (121) et/ou de l'ébauche de bague en laine d'acier, de sorte qu'un ajustement serré résulte entre le coussinet de palier (110) et la bague en laine d'acier (121).

7. Palier (100), en particulier palier d'arbre (100) qui résiste aux températures élevées et compense les tolérances, dans lequel le palier (100) est fabriqué selon l'une des revendications précédentes 1 à 6, qui comprend :
un coussinet de palier (110) qui est conçu pour recevoir une partie d'arbre,
une bague en laine d'acier (121) qui est conçue pour entourer le coussinet de palier (110),
dans lequel la bague en laine d'acier (121) entoure le coussinet de palier (110), en particulier
dans lequel la bague en laine d'acier (121) est serrée autour du coussinet de palier (110), de sorte que le coussinet de palier (110) soit entouré par la bague en laine d'acier (121), dans lequel
le coussinet de palier (110) présente exactement une fente (130) en continu, de sorte que la fente (130) divise une fois la paroi du coussinet de palier (110), dans lequel le fait de compresser ensemble le coussinet de palier (110) fendu est provoqué par la bague en laine d'acier (121) qui l'entoure.

8. Palier (100) selon la revendication 7, **caractérisé en ce que**
le coussinet de palier (110) présente un épaulement et/ou un flanc (120) annulaire et qui l'entoure à l'extérieur, contre lequel avoisine la bague en laine d'acier (121).

9. Palier (100) selon la revendication 7 ou 8, **caractérisé en ce que**
un logement est prévu dans lequel le coussinet de palier (110) est reçu avec la bague en laine d'acier (121) qui l'entoure.

10. Utilisation d'une laine circulaire d'acier compressée en tant que bague en laine d'acier de siège de palier (121) qui compense les amortissements et/ou les tolérances et résiste aux températures élevées pour un palier (100), en particulier pour un palier d'arbre à température élevée (100) dans une ligne de gaz d'échappement d'une ligne de gaz d'échappement de moteur à combustion, dans lequel le palier (100) est fabriqué selon l'une des revendications précédentes 7 à 9.
